**Europäisches Patentamt**

**European Patent Office**

**Office européen des brevets**

(11) Veröffentlichungsnummer: **0 253 102**
**A1**

## (12) EUROPÄISCHE PATENTANMELDUNG

(21) Anmeldenummer: **87107372.2**

(22) Anmeldetag: **21.05.87**

(51) Int. Cl.⁴: **G 11 B 23/023,** G 11 B 23/02

(30) Priorität: **15.07.86 DE 8618905 U**

(43) Veröffentlichungstag der Anmeldung: **20.01.88**
**Patentblatt 88/3**

(84) Benannte Vertragsstaaten: **DE FR GB IT**

(71) Anmelder: **fischerwerke Artur Fischer GmbH & Co. KG,**
**Weinhalde 14-18, D-7244 Tumlingen/Waldachtal 3 (DE)**

(72) Erfinder: **Nehl, Wolfgang, Martinskirche 22,**
**D-7244 Waldachtal 3/Tumlingen (DE)**

(54) **Aufbewahrungsbehälter für Magnetbandkassetten.**

(57) Es wird ein Aufbewahrungsbehälter für Magnetbandkassetten (3) oder dgl. angegeben, der mehrere Kassetten stehend oder liegend enthält und im Zugriffsbereich zwischen den Kassetten einen Freiraum hat. Erfindungsgemäss ist vorgesehen, dass jede Kassette (3) unabhängig von den übrigen Kassetten in das Innere des Aufbewahrungsbehälters einschiebbar ist und selbsttätig nach vorne gegen einen vorderen Anschlag (17) zurückgeschoben wird. Soll eine bestimmte Kassette (3) ergriffen werden, so werden dabei die beiden benachbarten Kassetten beim Zugreifen mit den Fingern (12) zurückgeschoben und gleiten nach der Entnahme der Kassette wieder in ihre Ausgangsstellung zurück.

Fischer Werke Artur Fischer GmbH & Co.KG, 7244 Tummlingen
200/06                                    10. Juli 1986
                                          Ott/ma


Aufbewahrungsbehälter für Magnetbandkassetten

Die Erfindung betrifft einen Aufbewahrungsbehälter für
Magnetbandkassetten oder dergleichen gemäß der Gattung
des Hauptanspruchs.

Derartige Aufbewahrungsbehälter finden heute vor allem
für CD-Kassetten, Magnetbandkassetten oder dergleichen
Anwendung. Sie werden zur Halterung dieser Kassetten
in Autos oder anderen Fahrzeugen aber auch im Heimbereich
verwendet. Zur Aufnahme dieser Kassetten dienen
beispielsweise federgelagerte Schubladen oder Schieber.
Werden jedoch Kassetten ohne Hilfsmittel in einen als
Box ausgebildeten Aufbewahrungsbehälter eingelegt, sei
es liegend oder stehend, bereitet es dem Benutzer erhebliche Schwierigkeiten, eine bestimmte Kassette wieder
aus der Box zu entnehmen, da in der Regel kein genügend
großer Freiraum zwischen den Kassetten als Zugriffsbereich entsteht.

Der Erfinder hat sich zum Ziel gesetzt, einen Auf-

...

bewahrungsbehälter der obengenannten Art zu entwickeln, welcher ohne Schubladen oder dergleichen für die Halterung der Kassetten auskommt und bei dem die Kassetten bzw. die Box selber keine speziellen Aussparungen, zurückgesetzte Wände oder dergleichen als Zugriffsbereich aufweisen muß.

Die Lösung dieser Aufgabe erhält man durch die im Hauptanspruch angegebenen Merkmale. Dadurch, daß zwischen den Kassetten ein Freiraum besteht, ist es möglich, bei Zugriff zu einer Kassette, die benachbarten Kassetten gleichzeitig mit den Figern zurückzuschieben, so daß die gewünschte Kassette problemlos ergriffen werden kann. Als Einrichtungen, die die Kassetten gegen vordere Anschläge schieben, können Schrägen und/oder geneigte Auflageflächen vorgesehen sein, wodurch die Kassetten selbsttätig gegen die vorderen Anschläge gleiten. Bevorzugt ist jedoch, im Bereich der Rückseite der Kassetten Federn oder entsprechende Vorschubeinrichtungen zu verwenden, mit Hilfe derer die Kassetten gegen die Anschläge gedrückt werden. Bei der Entnahme einer Kassette wird diese etwas angehoben, so daß die als Anschlag ausgebildete vordere Kante bzw. Fußleiste überwunden wird. Die benachbarten Kassetten gleiten dann beim Herausziehen der Kassette wieder in ihre ursprüngliche Lage.

Weitere vorteilhafte Merkmale und Einzelheiten der Erfindung ergeben sich aus der nachfolgenden Beschreibung bevorzugter Ausführungsbeispiele sowie anhand der Zeichnung; diese zeigt in

Figur 1 eine perspektivische Ansicht eines Aufbewahrungsbehälters für beispielsweise Magnetbandkassetten;

Figur 2 eine perspektivische Ansicht eines weiteren Ausführungsbeispiels eines Aufbewahrungsbehälters nach

...

Figur 1;

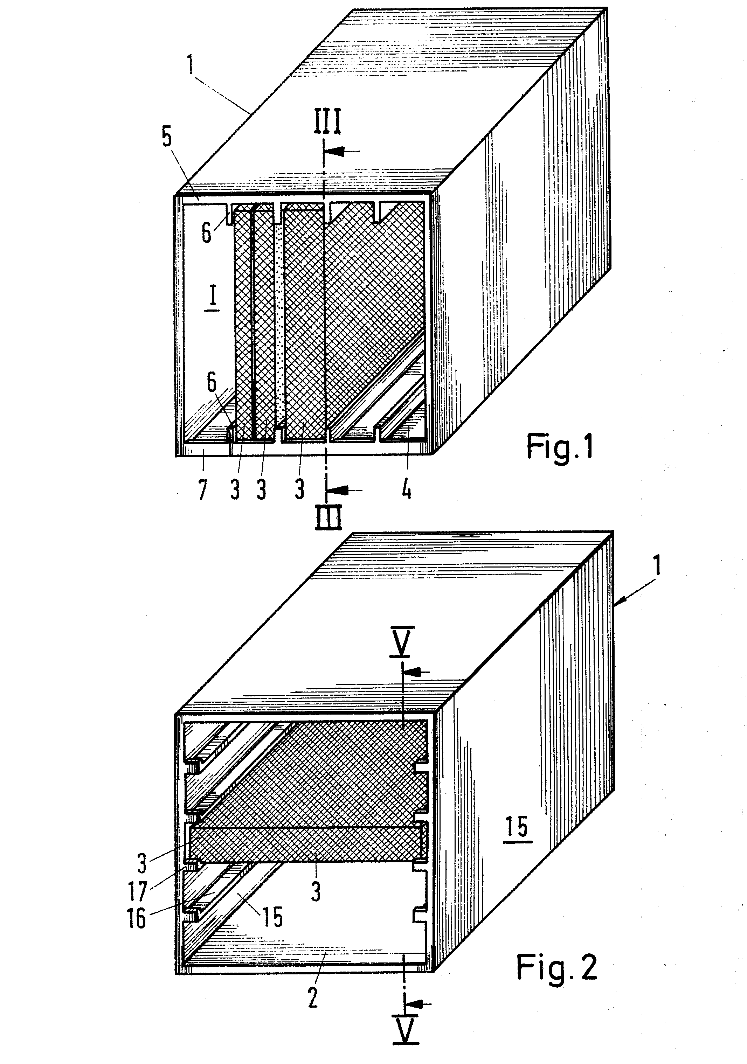

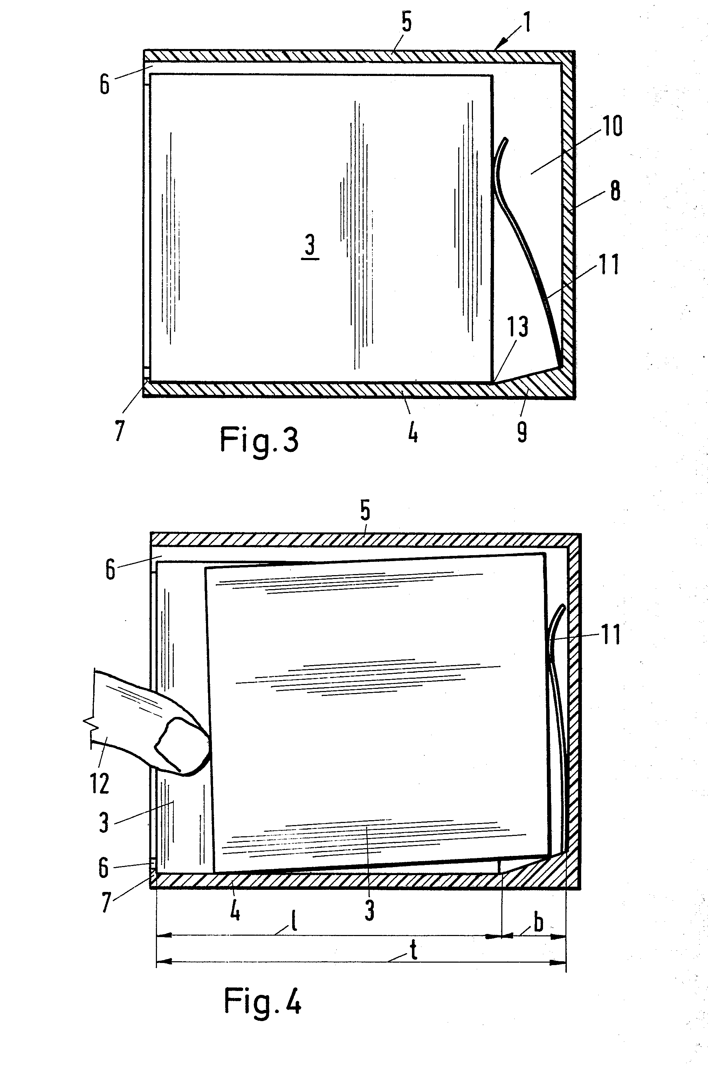

Figur 3 einen Querschnitt durch den Aufbewahrungsbehälter nach Figur 1 entlang Linie III - III;

Figur 4 einen Querschnitt entsprechend Figur 3, jedoch während der Entnahme einer Kassette;

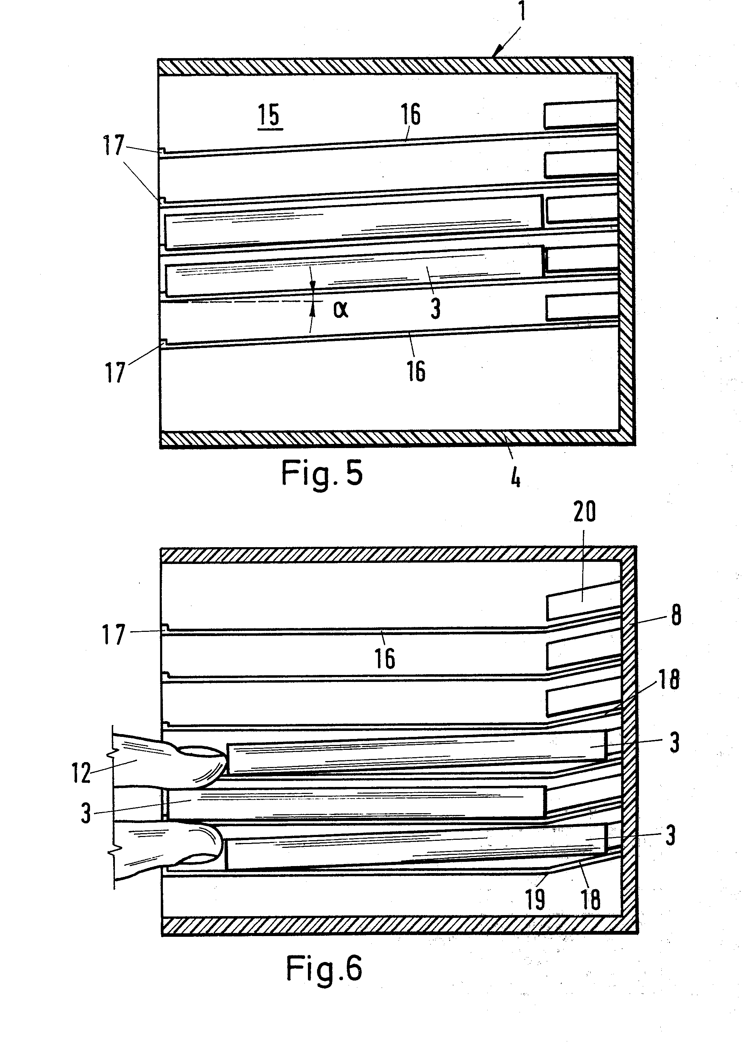

Figur 5 einen Querschnitt durch den Aufbewahrungsbehälter nach Figur 2 entlang Linie V - V; jedoch mit zwei Kassetten und 5 Lagerstegen;

Figur 6 einen Querschnitt durch ein weiteres Ausführungsbeispiel eines Aufbewahrungsbehälters entsprechend Figur 2 entlang Linie V - V.

Ein Aufbewahrungsbehälter, insbesondere für Magnetbandkassetten, besteht nach den Figuren 1 und 2 aus einer quaderförmigen Box 1 mit einer offenen Front 2. Diese Front kann selbstverständlich durch einen nicht näher gezeigten Deckel verschlossen sein.

Die in den Ausführungsbeispielen gezeigten Kassetten 3 sind in der Box 1 entweder stehend (siehe Figur 1) oder liegend (siehe Figur 2) angeordnet.

Bei den stehend angeordneten Kassetten 3 ragen von einem Boden 4 und gegenüberliegend von einer Decke 5 Haltestege 6 in den Innenraum I der Box 1 ein. Weiterhin ragt im Bodenbereich eine quer zu den Haltestegen 6 verlaufende Fußleiste 7 auf, an welcher die Kassetten 3 anschlagen.

In den Figuren 3 und 4 ist gezeigt, daß zur Rückwand 8 der Box 1 hin eine sich hochziehende Schräge 9 befindet. Die Schräge 9 hat eine Breite b, welche der Tiefe t der Box 1

...

vermindert um die Kassettenlänge 1 entspricht. Hierdurch ist hinter den Kassetten 3 ein Raum 10 ausgebildet, in welchen eine von der Schräge 9 aufragende Feder 11 eingreift, die sich gegen die Kassetten 3 abstützt.

In Ruhelage drückt diese Feder 11 die Kassette 3 gegen die Fußleiste 7, wodurch die Kassette in der Box 1 gehalten wird. Soll nun bei nebeneinanderstehenden Kassetten 3 eine Kassette entnommen werden, so können die neben der zu entnehmenden Kassette stehenden Kassetten mittels der Greiffinger 12 (siehe Figur 4) gegen die Kraft der Feder nach hinten gedrückt werden und die zu entnehmende Kassette wird freigelegt. Biem Herausziehen dieser Kassette folgen die von den Greiffingern 12 nach hinten gedrückten Kassetten bis zur Fußleiste 7 und verbleiben sodann in der Box 1.

Das Ausführungsbeispiel mit der Feder 11 soll nur als bevorzugt betrachtet werden. In einer einfacheren Ausgestaltung der Erfindung genügt alleine die Anordnung der Schräge 9, wobei sich diese in einem weiteren Ausführungsbeispiel auch von der Rückwand 8 der Box 1 bis zur Fußleiste 7 erstrecken kann, ohne dazwischen einen Knick 13 auszubilden. Die Schräge 9 ist so ausgestaltet, daß die Kassetten 3 durch ihr Eigengewicht nach vorne, also der Schräge entsprechend nach unten gleiten.

Bei dem Ausführungsbeispiel der Box 1 gemäß Figur 2 sind die Kassetten 3 liegend angeordnet. Zu ihrer Halterung dienen die Seitenwände 15 der Box 1 angeformte Führungsleisten 16, welche zur Front 2 hin eine hochgezogene Kante 17 aufweisen. Diese Kante 17 ist vergleichbar mit der Fußleiste 7.

Gemäß Figur 5 verlaufen die Führungsleisten 16 in einem

...

Winkel α zum Boden 4 der Box 1. Hierdurch wird wiederum eine Gleitfläche für die Kassetten 3 erzeugt, die in Transportlage an der Kante 17 anschlagen.

Gemäß Figur 6 sind die Führungsleisten 16 zur Rückwand 8 der Box 1 hin unter Ausbildung eines Knickes 19 mit einer Schräge 18 versehen, welche mit der Schräge 9 vergleichbar ist.

Weiterhin sind von der Rückwand 8 abragende Federn 20 schematisch angedeutet, welche die Kassetten 3 in Anschlag mit der Kante 17 halten.

Der Entnahmevorgang einer gewünschten Kassette ist ähnlich wie oben beschrieben. Durch das Eingreifen in die Box werden die beiden benachbarten Kassetten 3, eventuell gegen die Kraft ihrer zugeordneten Federn 20 zur Rückwand 8 hin verschoben, so daß die zu entnehmende Kassette freigegeben ist. Diese Kassette wird etwas angehoben, so daß sie außer Eingriff mit der Kante 17 gelangt und entnommen werden kann. Beim Herausziehen dieser Kassette folgen die benachbarten Kassetten den Greiffingern 12 bis zu ihren jeweiligen Kanten 17.

Fischer Werke Artur Fischer GmbH & Co.KG, 7244 Tummlingen
200/06                                              10. Juli 1986
                                                     Ott/ma


                              Schutzansprüche


        1. Aufbewahrungsbehälter für Magnetbandkassetten oder
        dergleichen, der mehrere Kassetten stehend oder liegend
        enthält, d a d u r c h   g e k e n n z e i c h n e t ,
        daß im Zugriffsbereich zwischen den Kassetten (3) ein
        Freiraum besteht; und daß Einrichtungen vorgesehen sind,
        die jede Kassette (3) unabhängig von den übrigen
        Kassetten (3) gegen einen vorderen Anschlag schieben.


        2. Aufbewahrungsbehälter nach Anspruch 1, d a d u r c h
        g e k e n n z e i c h n e t , daß die Kassetten (3) neben-
        oder übereinander auf seitlichen Führungsleisten (16)
        oder nebeneinander auf einem gemeinsamen Boden (4) aufliegen bzw. aufstehen; daß die Führungsleisten (16)
        beziehungsweise der Boden (4) in einem Winkel (α) geneigt
        sind und/oder unter Ausbildung eines Knickes (19; 13)
        eine Schräge (9; 18) aufweisen.


        3. Aufbewahrungsbehälter nach einem der Ansprüche 1 oder
        2, d a d u r c h   g e k e n n z e i c h n e t , daß die


                                                     . . .

Rückseite der Kassetten (3) von Federn (11; 20) oder dergleichen Vorschubeinrichtungen beaufschlagt ist, und daß die Führungsleisten (16) von Kanten (17) bzw. der Boden (4) von einer Fußleiste (7) abgeschlossen ist, welche den Anschlag für die Kassetten (3) bilden.

4. Aufbewahrungsbehälter nach einem der Ansprüche 2 oder 3, d a d u r c h  g e k e n n z e i c h n e t, daß die Schräge (9, 18) eine Breite (b) aufweist, welche der Tiefe (t) des Aufbewahrungsbehälters vermindert um die Kassettenlänge (l) entspricht.

1/3

Fig.1

Fig.2

Fig. 3

Fig. 4

Fig. 5

Fig.6

## EINSCHLÄGIGE DOKUMENTE

EP 87107372.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB - A - 1 366 936 (SUPREME EQUIPMENT) <br><br> * Fig. 1-6; Seite 1, Zeile 54 - Seite 2, Zeile 54 * <br><br> -- | 1-4 | G 11 B 23/023 <br><br> G 11 B 23/02 |
| A | FR - A1 - 2 274 106 (IDN) <br><br> * Fig. 7,8; Seite 7, Zeile 17 - Seite 8, Zeile 19 * <br><br> -- | 1-4 | |
| A | DD - A - 129 380 (IDN) <br><br> * Fig. 1,2; Ansprüche 1-3 * <br><br> ---- | 1-4 | |

RECHERCHIERTE SACHGEBIETE (Int. Cl.4)

G 11 B 23/00

G 11 B 33/00

A 47 B 81/00

Der vorliegende Recherchenbericht wurde für alle Patentansprüche erstellt.

| Recherchenort | Abschlußdatum der Recherche | Prüfer |
|---|---|---|
| WIEN | 16-10-1987 | BERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82